# EUROPEAN PATENT SPECIFICATION

(11) **EP 1 760 125 B1**
(45) Date of publication and mention of the grant of the patent: **14.05.2008**
(21) Application number: 06254434.1
(22) Date of filing: 24.08.2006
(51) Int. Cl.: C09D 133/02, C09D 193/00, C08L 33/02, C08L 93/00

(54) **Polymer binding resins**
Polymere Bindemittel
Résines polymères liantes

(30) Priority: 01.09.2005 US 713490 P
(43) Date of publication of application: 07.03.2007
(73) Proprietor: Rohm and Haas Company, Philadelphia, PA 19106-2399 (US)
(72) Inventor: Finch, William C, Pennsylvania 19422 (US); Tang, Xun, Dresher, Pennsylvania 19025 (US)
(74) Representative: Kent, Venetia Katherine

(56) References cited:
- EP-A- 0 990 729

## Description

The invention relates to curable aqueous compositions and in particular polycarboxy polymers modified with compatible reactive tackifier. The reactive tackifier provides modification of rheological properties of an adhesive polymer to promote bond formation and minimize bond rupture.

Phenol-formaldehyde binders have been used to treat fiberglass because they have a low viscosity for proper flow in an uncured state and also form a rigid thermoset polymeric matrix for glass fibers when cured. A low binder viscosity in the uncured state allows a maximum vertical expansion of a coated mat when it exits a fiberglass forming chamber. A binder that forms a rigid matrix, which is a densely crosslinked structure, when cured produces a finished fibrous glass thermal or acoustical insulation product that, when compressed for packaging and shipping, will recover substantially to its as-made vertical dimension when decompressed and installed in a building.

Insulation manufacturers have desired an alternative polymeric binder system for fibrous glass products. However, low molecular weight, low viscosity binders, which allow maximum vertical expansion of the mat upon exiting the forming chamber, generally cure to form a non-rigid plastic matrix in the finished product. As a result, the attainable vertical height recovery of the finished insulation product when installed is often reduced. Conversely, high viscosity binders, which generally cure to form a rigid matrix in the finished product, generally do not allow maximum vertical expansion of the coated, uncured mat. Therefore, insulation manufacturers need a non-phenol/formaldehyde binder with low viscosity when uncured and structural rigidity when cured.

Alternative polymeric binder systems have been disclosed in U.S. Patents Nos. 6,539,152 and 6,699,945. Specifically, U.S. Patent No. 6,539,152 discloses tackifiers for modifying time-sensitive rheological properties, such as viscosity and modulus, of optical fiber coatings, in which the polymerizable base composition contains at least one monomer and optionally at least one oligomer. The polymerizable base composition is substantially free of unsaturated epoxidized diene polymers. This tackifier is non-reactive, so it remains in the polymerizable base composition as a separate moiety.

U.S. Patent No. 6,699,945 discloses pre-reacting low molecular weight polyacid monomer or oligomer with polyol and admixing with polycarboxylic acid to form a co-binder solution purportedly having low viscosity before curing and structural rigidity after curing. The extra pre-reaction step, however, increases processing time and its associated costs.

EP 0 990 729 discloses fiberglass binder which contains a polycarboxy polymer and a polyol, with a pH of the binder being no greater than 3.5. It is further preferred that the polycarboxy polymer has a molecular weight of less than 10,000, and more preferably about 5000 or less. The binder also preferably includes a catalyst which is an alkali metal salt of a phosphorus polyol is preferably triethanolamine. The binder also preferably includes a catalyst which is an alkali metal salt of a phosphorus-containing organic acid.

For a polymeric composition to function as a binder for glass fibers, it must have a balance of elastic and viscous properties. It must possess sufficient viscous flow properties to bring the binder and the glass substrate into intimate enough contact for adhesive bonds to form. Once these bonds form, the polymer must have elastic strength to hold the system together. In the present invention, the polycarboxy polymer provides most of the elastic properties, while the reactive tackifier provides the viscous component. Once combined, the system exhibits the viscoelastic rheological behavior necessary for a binder, i.e., viscous flow to allow adhesive bonds to form and elasticity for strength.

The present invention in its various aspects is as set out in the appended claims.

This invention provides an aqueous composition, which may be used as a binder, having low viscosity, i.e., a viscosity that allows the binder to flow out and cover the substrate, before curing and excellent rigidity properties, as measured by tensile strength, after curing. One aspect of the invention is an aqueous composition comprising a polycarboxy polymer; a reactive tackifier selected from the group consisting of rosin-based resins, rosin esters, terpene-based resins, coumarone-based resins, and phenolic tackifiers; and a polyol.

The polycarboxy polymer used in the aqueous composition of the present invention comprises an organic polymer containing more than one pendant carboxy group. The polycarboxy polymer may be a homopolymer or copolymer prepared from unsaturated carboxylic acids, including, acrylic acid, methacrylic acid, crotonic acid, isocrotonic acid, maleic acid, cinnamic acid, 2-methylmaleic acid, itaconic acid, 2-methylitaconic acid, and - and -methyleneglutaric acid. Alternatively, the polycarboxy polymer may be prepared from unsaturated anhydrides, including, but not limited to, maleic anhydride, and methacrylic anhydride, as well as mixtures thereof. Methods for polymerizing these acids and anhydrides are well-known in the chemical art.

The polycarboxy polymer may additionally comprise a copolymer of one or more of the aforementioned unsaturated carboxylic acids or anhydrides and one or more vinyl compounds, including, styrene, -methylstyrene, acrylonitrile, methacrylonitrile, methyl acrylate, ethyl acrylate, n-butyl acrylate, isobutyl acrylate, methyl methacrylate, n-butyl methacrylate, isobutyl methacrylate, glycidyl methacrylate, vinyl methyl ether, and vinyl acetate. The polycarboxy polymer may be prepared by solution polymerization, emulsion polymerization, or suspension polymerization techniques for polymerizing ethylenically-unsaturated monomers, which are well known in the art. For emulsion polymerization, anionic or nonionic surfactants, or mixtures thereof, may be used. The polymerization may be carried out, for example, with all of the monomer in the reaction kettle at the beginning of the polymerization reaction, with a portion of the monomer in emulsified form present in the reaction kettle at the beginning of the polymerization reaction, and with a small particle size emulsion polymer seed present in the reaction kettle at the beginning of the polymerization reaction.

Preferred polycarboxy polymers comprise homopolymers and copolymers of polyacrylic acid prepared by free radical addition polymerization. The polycarboxy polymer has a molecular weight from 500 to 10,000,000. Preferred is a molecular weight from 2000 to 250,000 and most preferred is a molecular weight from 10000 to 100000. Molecular weights herein are weight average molecular weights. When the polycarboxy polymer is an alkali-soluble resin having a carboxylic acid, anhydride, or salt thereof, content of from 5% to 30%, by weight based on the total weight of the polycarboxy polymer, a molecular weight from 10,000 to 100,000 is preferred, higher molecular weight alkali-soluble resins leading to curable compositions which exhibit excessive viscosity.

Any tackifier that produces the desired modification of viscosity and modulus may be utilized in the aqueous composition of the present invention. A tackifier is a resin capable of modifying the rheological properties of an adhesive polymer in such a way as to promote bond formation, while at the same time making bond rupture more difficult. The modified rheological properties include low viscosity at low shear prior to cure for good flow/sizing and high modulus after cure for structural rigidity. Typically, the resin must have a low molecular weight relative to that of the base polymer being treated, and have an appreciable degree of compatibility with the base polymer. Compatibility is a measure of the mutual solubility of two materials, and depends on the molecular weight and Tg of both components, as well as on their compositions.

More specifically, in the aqueous composition before it is applied to a substrate, the reactive tackifier may, but does not have to, impart tackiness to the aqueous composition. Moreover, preferably, the aqueous composition, when used as a fiberglass insulation binder, does not contain enough reactive tackifier for the composition to become appreciably tacky after the composition is applied to the hot glass fibers immediately after being spun (which initiates water evaporation) and while the coated glass fibers are in the forming chamber (where more water is removed). However, after the coated glass fibers are conveyed from the forming chamber, but before they reach the curing chamber, the amount of the reactive tackifier in the original aqueous composition preferably should be sufficient enough for the binder composition to become tacky before the coated fiberglass reaches the curing chamber to hold the fiberglass mat together better than a composition with little tackiness would. In other words, when the term "reactive tackifier" is used, it does not mean that it imparts tackiness to the composition at any point, but preferably that it imparts at least some tackiness at the stage of fiberglass manufacture described above. The reactive tackifiers used in this invention, in other words, can impart other desirable properties to a binder composition besides tackiness.

A reactive tackifier is a tackifier having the functionality of reacting with the polycarboxy polymer and/or polyol components of the aqueous composition. In the present invention, this functionality includes carboxylic acid groups, hydroxyl groups, and ester groups. Preferred reactive tackifiers are those classified as a rosin-based resin, terpene-based resin, coumarone-based resin, and phenolic tackifiers.

The rosin-based resins are resins containing rosin or a rosin derivative as a base material. Rosin-based resins can be classified by their rosin acids, which are either abietic acids or pimaric acids. Abietic acid type rosins are preferred. Rosin derivatives include polymerized rosin, disproportionated rosin, hydrogenated rosin, and esterified rosin. Representative examples of such rosin derivatives include pentaerythritol esters of tall oil, gum rosin, wood rosin, or mixtures thereof.

The terpene-based resins include terpene polymers of α-pinene, β-pinene, dipentel, limonene, myrcene, bornylene and camphene, and phenol-modified terpene base resins obtained by modifying these terpene base resins with one or more phenols. Phenol-modified terpenes are preferred. An exemplary phenol-modified terpene is TAMANOL 803L from Arakawa Chemical Inc. (Chicago, IL). The coumarone-based resins include, for example, coumarone, coumarone-indene resins, and phenol-modified coumarone-indene resins. Phenol-modified coumarone-indene resins are preferred. An exemplary phenol-modified coumarone-indene resin is NOVARES® CA 80 from Rütgers Chemicals (Germany).

The phenolic tackifiers suitable for use in the invention are C1-12 alkylphenols, C1-12 arylphenols, and C1-12 aralkylphenols, as well as condensation products of such phenols with aldehydes (such as formaldehyde, acetaldehyde and furfural), which condensation products have a molecular weight (Mn) less than 1500, preferably less than 500. "Phenol" means a class of aromatic organic compounds in which one or more hydroxy groups are attached directly to the benzene ring (e.g., benzophenol, cresols, xylenols, resorcinol, and naphthols). Exemplary phenolic tackifiers include P-133 RESIN available from Akrokem Corporation (Akron, Ohio), HRJ-10420 from Shedenectady Inernational Inc. (Schenectady, New York), and TAMANOL 500 series resins from Arakawa Chemical Inc. (Chicago, IL).

Of the suitable reactive tackifiers, rosin derivatives are preferred. Of the rosin derivatives, esterified rosins are most preferred, especially esterified abietic acid rosins. The estierified rosins are, preferably, esterified with polyhydric alcohols, such as ethylene glycol, glycerol and pentaerythritol. Polyhydric alcohols are often used for esterification to obtain products that have higher softening points and are more polymeric in nature. An exemplary abietic acid ester is SYLVATAC® RE 40, available from Arizona Chemical (Jacksonville, FL), formerly known as, UNITAC ® R-40, available from Union Camp Corp. (Wayne, N.J.).

Preferably, an effective amount of the reactive tackifier, for purposes of modifying the stress-dependent rheological properties of compositions, is used in the aqueous composition of this invention. An effective amount is 0.1 to 30 percent by weight of the polycarboxy polymer, more preferably, 1 to 20 percent by weight, and even more preferably, 2 to 10 percent by weight.

The reactive tackifier lowers the average molecular weight of the polycarboxy polymer by acting as a "solid solvent" to promote viscous flow of the binder composition prior to cure in forming a matrix, thereby minimizing process difficulties, including poor flow, and improving sizing of the finished product. During cure, the reactive tackifier reacts with the polycarboxy polymer and/or the polyol (preferably the former) to become a permanent part of the polymeric matrix that is formed, thereby increasing the average molecular weight and strength of the composition.

The rheological properties of an aqueous composition modified with reactive tackifier determine whether the composition will function as intended under particular stress rates; i.e., composition will have low viscosity at low stress rate and high modulus at high stress rate. For glass fiber coatings, the aqueous composition is expected to experience both low stress rate conditions and high stress rate conditions both prior to cure and subsequent to cure. High stress rate conditions are those at or above 100 s⁻¹ (Hz) and low stress rate conditions are those at or below about 1s⁻¹ (Hz). Generally, stress rates intermediate these two extremes will be expected to cause the composition to behave more or less as a glassy product or more or less as a rubbery product, depending on how close the applied stress rate is to either of these extremes. Since the behavior of the aqueous composition is temperature-dependent, temperatures approaching the Tg of polycarboxy polymer modified with reactive tackifier will significantly affect whether the composition, when the water is substantially driven off but before cure (i.e., at the time the stress is applied to the formed fiberglass during manufacture), has glassy or rubbery attributes.

The polyol of the aqueous composition, preferably, contains at least three hydroxyl groups. The polyol must be sufficiently nonvolatile such that it will substantially remain available for reaction with the polycarboxy polymer in the composition during heating and curing operations. The polyol may be a compound with a molecular weight less than about 1000 bearing at least two hydroxyl groups such as, for example, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, triethanolamine, and certain reactive polyols such as, for example, β-hydroxyalkylamides such as, for example, bis[N,N-di(β-hydroxyethyl)]adipamide. The polyol may be prepared according to the teachings of U.S. Pat. No. 4,076,917 or it may be an addition polymer containing at least two hydroxyl groups such as, for example, polyvinyl alcohol, partially hydrolyzed polyvinyl acetate, and homopolymers or copolymers of hydroxyethyl (meth)acrylate, and hydroxypropyl (meth)acrylate. The most preferred polyol is triethanolamine (TEA).

The ratio of the number of equivalents of carboxy, anhydride, or salts thereof of the polycarboxy polymer to the number of equivalents of hydroxyl in the polyol is from 1/0.01 to 1/3. An excess of equivalents of carboxy, anhydride, or salts thereof of the polycarboxy polymer to the equivalents of hydroxyl in the polyol is preferred. The more preferred ratio is from 1/0.1 to 1/0.7 and the most preferred ratio is from 1/0.25 to 1/0.6.

The pH of the aqueous composition is preferably low, e.g., no greater than 3.5. More preferably, the pH of the aqueous composition is 2.5 or less, and most preferably, 2 or less. Excellent processing advantages and a product that fully recovers to its original thickness after compression/rigidity to resist sagging or loss of thickness due to moisture or humidity exposure have been discovered when such low pH compositions are used. The processing advantages manifest themselves in reduced accumulation of fiber in the collection box and reduced cure temperature. The reduction in cure temperature results in a reduction of the amount of energy needed to cure the binder, and thereby permits, if desired, the use of more water in the binder to obtain many processing benefits.

The aqueous composition of the present invention may also comprise an accelerator. Preferably, the accelerator is a phosphorous-containing compound, which may be a compound with a molecular weight less than 1000. Examples include an alkali metal hypophosphite salt, hypophosphorous acid, an alkali metal phosphite, an alkali metal polyphosphate, an alkali metal dihydrogen phosphate, a polyphosphoric acid, and an alkyl phosphinic acid or it may be an oligomer or polymer bearing phosphorous-containing groups such as, for example, addition polymers of acrylic and/or maleic acids formed in the presence of sodium hypophosphite, addition polymers prepared from ethylenically unsaturated monomers in the presence of phosphorous salt chain transfer agents or terminators, and addition polymers containing acid-functional monomer residues such as, for example, copolymerized phosphoethyl methacrylate, and other phosphonic acid esters, and copolymerized vinyl sulfonic acid monomers, and their salts.

To improve solubility in aqueous media, the carboxylic acid groups, anhydride groups, or salts thereof of the one or more polycarboxy polymers may be neutralized with one or more fixed or volatile bases. A volatile base means one or more bases, which are substantially volatile under the conditions of treatment of the substrate with the composition. A fixed base is a base that is substantially non-volatile under the conditions of treatment of the substrate with the composition.

Use of volatile bases permits curing of the aqueous composition without a strong acid accelerator, where such curing is possible. Suitable volatile bases include, for example, ammonia and volatile lower alkyl amines. Suitable fixed bases include, for example, sodium hydroxide, potassium hydroxide, sodium carbonate, and t-butylammonium hydroxide. The fixed base is sufficiently nonvolatile in that it will substantially remain in the aqueous composition during heating and curing operation. The volatile base can be used in addition to the fixed base. Fixed multivalent bases such as, for example, calcium carbonate, may destabilize aqueous compositions if the copolymer component is used in the form of an aqueous dispersion; however, they can be used in a minor amount.

In one embodiment of the invention, the aqueous composition further comprises at least one low molecular weight polybasic carboxylic acid, anhydride or salt thereof having a molecular weight of 1000 or less, preferably 500 or less, and most preferably 200 or less. "Polybasic" means having at least two reactive acid or anhydride functional groups. Examples of suitable low molecular weight polybasic carboxylic acids and anhydrides include, for example, maleic acid, maleic anhydride, fumaric acid, succinic acid, succinic anhydride, sebacic acid, azelaic acid, adipic acid, citric acid, glutaric acid, tartaric acid, itaconic acid, trimellitic acid, hemimellitic acid, trimesic acid, tricarballytic acid, 1,2,3,4-butanetetracarboxylic acid, pyromellitic acid, and oligomers of carboxylic acid. Optionally, the low molecular weight polybasic carboxylic acid, anhydride or salt thereof may be mixed with the polyol, under reactive conditions, prior to mixing with the polycarboxy polymer.

In another embodiment, the aqueous composition further comprises a strong acid, i.e., a non-carboxylic acid having at least one pKa of no greater than 3. In this embodiment, the aqueous composition, preferably, contains from 0.01 to 0.2 equivalents of the strong acid, relative to the equivalents of total carboxylic acid, and more preferably, from 0.01 to 0.18 equivalents. "Total carboxylic acid" means the entire amount of the carboxylic acid present in the aqueous composition. The strong acid may be a mineral acid, such as, for example, sulfuric acid, or an organic acid, such as, for example, a sulfonic acid. Mineral acids are preferred.

In embodiments where the carboxylic acid groups, anhydride groups, or salts of the polycarboxy addition polymer are neutralized with base, either volatile or fixed, the pH of the aqueous composition may be 9.5 or less. The pH is preferably, 8.5 or less, more preferably, 7.5 or less, and even more preferably, 6.5 or less. In embodiments where the aqueous composition contains a strong acid, the pH of the binder composition is, preferably, 4.5 or less, more preferably, 3.5 or less, and even more preferably, 2.5 or less.

In one embodiment of the invention, the aqueous composition is further blended with an emulsion polymer including, as polymerized units, at least one copolymerized ethylenically unsaturated nonionic acrylic monomer. "Predominately acrylic" means that the polymer contains greater than 50%, and preferably, greater than 60%, by weight, copolymerized units derived from (meth)acrylic monomers, such as, for example, (meth)acrylate esters, (meth)acrylamides, (meth)acrylonitrile, and (meth)acrylic acid. Nonionic monomer means that the copolymerized monomer residue does not bear an ionic charge between pH = 1-14.

The ethylenically unsaturated nonionic acrylic monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, and hydroxyalkyl(meth)acrylate monomers, such as 2-hydroxyethyl methacrylate, 2-hydroxyethyl acrylate, 2-hydroxypropyl methacrylate, 1-methyl-2-hydroxyethyl methacrylate, 2-hydroxy-propyl acrylate, 1-methyl-2-hydroxyethyl acrylate, 2-hydroxybutyl methacrylate and 2-hydroxybutyl acrylate. Other ethylenically unsaturated nonionic monomers, which may be incorporated into the emulsion polymer, include vinylaromatic compounds, such as styrene, α-methylstyrene, p-methylstyrene, ethylvinylbenzene, vinylnaphthalene, vinylxylenes, and vinyltoluenes; vinyl acetate, vinyl butyrate and other vinyl esters; and vinyl monomers, such as vinyl chloride, vinyl toluene, vinyl benzophenone, and vinylidene chloride.

Furthermore, ethylenically unsaturated nonionic acrylic monomers include acrylamides and alkyl-substituted acrylamides, such as acrylamide, methacrylamide, N-tert-butylacrylamide and N- methyl(meth)acrylamide; and hydroxyl-substituted acrylamides, such as methylolacrylamide and beta-hydroxyalkylamides.

The emulsion polymer may contain monoethylenically-unsaturated acid monomer, such as, for example, acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate, phosphoalkyl (meth)acrylates, such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate.

The emulsion polymer used in this invention may contain copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, butadiene, and divinyl benzene.

The aqueous composition may contain, in addition, conventional treatment components such as, for example, emulsifiers, pigments, fillers, anti-migration aids, curing agents, coalescents, wetting agents, hydrophobizing agents, biocides, plasticizers, organosilanes, anti-foaming agents, colorants, waxes, and anti-oxidants.

The aqueous composition of the invention may be prepared by admixing the polycarboxy polymer, reactive tackifier, and polyol using conventional mixing techniques. Alternatively, a carboxyl- or anhydride-containing polymer and a polyol may be present in the same polymer, where the polymer would contain both carboxyl and anhydride, or salts thereof functionality and hydroxyl functionality. In another embodiment, the salts of the carboxy-group are salts of functional alkanolamines with at least two hydroxyl groups such as, for example, diethanolamine, triethanolamine, dipropanolamine, and di-isopropanolamine. In an additional embodiment, the polyol and a phosphorous-containing accelerator may be present in the same polymer, which may be mixed with a polycarboxy polymer. In yet another embodiment, the carboxyl- or anhydride-containing polymer, the polyol, and the phosphorous-containing accelerator may be present in the same polymer. Other embodiments will be apparent to one skilled in the art.

The aqueous composition, after it is applied to a material, such as a coated mat, is heated to effect drying and curing. The duration and temperature of heating will affect the rate of drying, processability and handleability, and property development of the treated substrate. Heat treatment at 120 °C to 400 °C for a period of time between 3 seconds to 15 minutes may be performed. The drying and curing functions may be affected in two or more distinct steps, if desired. For example, the aqueous composition may first be heated at a temperature and for a time sufficient to substantially dry but not to substantially cure the composition and then heated for a second time at a higher temperature and/or for a longer period of time to effect curing.

Once the aqueous composition has been formed, it may be used as a binder for materials, such as glass fibers. In the preparation of fiberglass insulation products, known conventional techniques may be utilized. As is well known, a porous mat of fibrous glass may be produced by fiberizing molten glass and immediately forming a fibrous glass mat on a moving conveyor. The expanded mat is then conveyed to and through a curing oven wherein heated air is passed through the mat to cure the resin. The mat is slightly compressed to give the finished product a predetermined thickness and surface finish. Typically, the curing oven is operated at a temperature from 150 °C to 325 °C. Preferably, the temperature ranges from 180 °C to 250 °C. Generally, the mat resides within the oven for a period of time from 1/2 minute to 3 minutes. For the manufacture of conventional thermal or acoustical insulation products, the time ranges from 1 minute to 21/2 minutes. The fibrous glass, having a cured, rigid binder matrix, emerges from the oven in the form of a bat which may be compressed for packaging and shipping and which will thereafter substantially recover its vertical dimension when unconstrained.

The aqueous composition of this invention can also be used as a binder for heat-resistant non-woven fabrics such as, for example, non-wovens which contain heat-resistant fibers, such as, for example, aramid fibers, ceramic fibers, metal fibers, carbon fibers, polyimide fibers, certain polyester fibers, rayon fibers, rock wool, and glass fibers. "Heat-resistant fibers" mean fibers which are substantially unaffected by exposure to temperatures above 125°C. Heat-resistant non-wovens may also contain fibers that are not in themselves heat-resistant, such as, for example, certain polyester fibers, rayon fibers, nylon fibers, and super-absorbent fibers, in so far as they do not materially adversely affect the performance of the substrate, e.g., by decomposing at high enough temperatures.

Non-woven fabrics are composed of fibers that may be consolidated by purely mechanical means, such as, for example, by entanglement caused by needle-punching, by an air-laid process, and by a wet-laid process; by chemical means such as, for example, treatment with a polymeric binder; and by a combination of mechanical and chemical means before, during, or after non-woven fabric formation. Some non-woven fabrics are used at temperatures substantially higher than ambient temperature such as, for example, glass fiber-containing non-woven fabrics, which are impregnated with a hot asphaltic composition pursuant to making roofing shingles or roll roofing material. When a non-woven fabric is contacted with a hot asphaltic composition at temperatures of from 150°C to 250°C, the non-woven fabric may sag, shrink, or otherwise become distorted. Therefore, non-woven fabrics that incorporate a copolymer composition should substantially retain the properties contributed by the cured aqueous composition such as, for example, tensile strength. In addition, the cured composition should not substantially detract from essential non-woven fabric characteristics, as would be the case, for example, if the cured composition were too rigid or brittle or became sticky under processing conditions.

The heat-resistant non-wovens may be used for applications, such as, for example, insulation batts or rolls, reinforcing mat for roofing or flooring applications, roving, microglass-based substrate for printed circuit boards or battery separators, filter stock, tape stock, and reinforcement scrim in cementitious and non-cementitious coatings for masonry, in ceiling tiles, in cellulosic roofing tiles, in window treatments, in wall coverings, in molded parts, for curly pulp modification, and for powder coating.

## Claims

1. An aqueous composition comprising:
a polycarboxy polymer having a weight average molecular weight from 500 to 10,000,000;
a reactive tackifier selected from the group consisting of rosin-based resins, rosin esters, terpene-based resins, coumarone-based resins, and phenolic tackifiers; and
a polyol and wherein the ratio of the number of equivalents of carboxy, anhydride, or salts thereof of the polycarboxy polymer to the number of equivalents of hydroxyl in the polyol is from 1/0.01 to 1/3.

2. The aqueous composition of claim 1 wherein a pH of the composition is no greater than 3.5.

3. The aqueous composition of claim 1 further comprising at least one of a phosphorous-containing accelerator, a low molecular weight polybasic acid, and emulsion polymer.

4. The aqueous composition of claim 1 wherein the phenolic tackifier is selected from the group consisting of C1-12 alkylphenols, C1-12 arylphenols, and C1-12 aralkylphenols, and condensation products of phenols with an aldehyde.

5. The aqueous composition of claim 1 further comprising an accelerator selected from the group consisting of sodium hypophosphite, sodium phosphite, and mixtures thereof.

6. The aqueous composition of claim 1 wherein an amount of polycarboxy polymer and polyol in the binder is in the ratio of carboxy group equivalents to hydroxyl group equivalents of from 1/0.25 to 1/0.6.

7. The aqueous composition of claim 1 wherein the reactive tackifier comprises a rosin-based resin having a rosin derivative.

8. The aqueous composition of claim 1 wherein the polyol comprises triethanolamine.

9. The aqueous composition of claim 1 wherein the reactive tackifier comprises 0.1 to 30% of the polycarboxy polymer.

10. A product comprising a substrate treated with the aqueous composition of claim 1.

## Patentansprüche

1. Wässrige Zusammensetzung, umfassend:
ein Polycarboxypolymer mit einem Gewichtsmittel des Molekulargewichts von 500 bis 10000000,
einen reaktiven Klebrigmacher, ausgewählt aus der Gruppe, bestehend aus Harzen auf Basis von Kolophonium, Kolophoniumestern, Harzen auf Basis von Terpen, Harzen auf Basis von Coumaron, und phenolischen Klebrigmachern, und
ein Polyol, und wobei das Verhältnis der Äquivalentzahl von Carboxyl, Anhydrid oder Salzen davon, des Polycarboxypolymers zu der Äquivalentzahl von Hydroxyl in dem Polyol 1/0,01 bis 1/3 beträgt.

2. Wässrige Zusammensetzung nach Anspruch 1, wobei ein pH der Zusammensetzung nicht größer als 3.5 ist.

3. Wässrige Zusammensetzung nach Anspruch 1, weiter umfassend mindestens eines von einem Phosphor-enthaltenden Beschleuniger, einer mehrbasigen Säure von niedrigem Molekulargewicht und einem Emulsionspolymer.

4. Wässrige Zusammensetzung nach Anspruch 1, wobei der phenolische Klebrigmacher aus der Gruppe, bestehend aus C1-12 Alkylphenolen, C1-12 Arylphenolen und C1-12 Aralkylphenolen, und Kondensationsprodukten von Phenolen mit einem Aldehyd, ausgewählt ist.

5. Wässrige Zusammensetzung nach Anspruch 1, weiter umfassend einen Beschleuniger, ausgewählt aus der Gruppe, bestehend aus Natriumhypophosphit, Natriumphosphit, und Gemischen davon.

6. Wässrige Zusammensetzung nach Anspruch 1, wobei eine Menge an Polycarboxypolymer und Polyol in dem Bindemittel im Verhältnis von Carboxylgruppen-Äquivalenten zu Hydroxylgruppen-Äquivalenten von 1/0,25 bis 1/0,6 vorliegt.

7. Wässrige Zusammensetzung nach Anspruch 1, wobei der reaktive Klebrigmacher ein Harz auf Basis von Kolophonium umfasst, welches ein Kolophoniumderivat aufweist.

8. Wässrige Zusammensetzung nach Anspruch 1, wobei das Polyol Triethanolamin umfasst.

9. Wässrige Zusammensetzung nach Anspruch 1, wobei der reaktive Klebrigmacher 0,1 bis 30% des Polycarboxypolymers umfasst.

10. Produkt, umfassend ein mit der wässrigen Zusammensetzung nach Anspruch 1 behandeltes Substrat.

## Revendications

1. Composition aqueuse comprenant :
un polymère polycarboxy ayant un poids moléculaire moyen en poids de 500 à 10 000 000 ;
un agent collant réactif choisi parmi des résines à base de colophane, des esters de colophane, des résines à base de terpène, des résines à base de coumarone et des agents collants phénoliques ; et
un polyol et dans laquelle le rapport du nombre d'équivalents carboxy, anhydride ou de sels de ceux-ci du polymère polycarboxy au nombre d'équivalents hydroxyle dans le polyol est de 1/0,01 à 1/3.

2. Composition aqueuse selon la revendication 1, dans laquelle un pH de la composition est d'au plus 3,5.

3. Composition aqueuse selon la revendication 1 comprenant de plus au moins un accélérateur contenant du phosphore, un acide polybasique de faible poids moléculaire et un polymère en émulsion.

4. Composition aqueuse selon la revendication 1, dans laquelle l'agent collant phénolique est choisi parmi des alkylphénols en C1-C12, des arylphénols en C1-C12 et des aralkylphénols en C1-C12 et des produits de condensation de phénols avec un aldéhyde.

5. Composition aqueuse selon la revendication 1 comprenant de plus un accélérateur choisi parmi l'hypophosphite de sodium, le phosphite de sodium et des mélanges de ceux-ci.

6. Composition aqueuse selon la revendication 1, dans laquelle une quantité de polymère polycarboxy et de polyol dans le liant est dans le rapport des équivalents de groupe carboxy aux équivalents de groupe hydroxyle de 1/0,25 à 1/0,6.

7. Composition aqueuse selon la revendication 1, dans laquelle l'agent collant réactif comprend une résine à base de colophane ayant un dérivé de colophane.

8. Composition aqueuse selon la revendication 1, dans laquelle le polyol comprend de la triéthanolamine.

9. Composition aqueuse selon la revendication 1, dans laquelle l'agent collant réactif constitue de 0,1 à 30 % du polymère polycarboxy.

10. Produit comprenant un substrat traité avec la composition aqueuse selon la revendication 1.
